# EUROPÄISCHE PATENTSCHRIFT

(11) **EP 1 163 294 B1**
(45) Veröffentlichungstag und Bekanntmachung des Hinweises auf die Patenterteilung: **02.10.2002**
(21) Anmeldenummer: 00920515.4
(22) Anmeldetag: 20.03.2000
(51) Int. Cl.: C09B 67/22

(54) **PURPURFARBENE PIGMENTZUSAMMENSETZUNG UND DEREN VERWENDUNG**
CRIMSON-COLORED PIGMENT COMPOSITION AND THE UTILIZATION THEREOF
COMPOSITION DE PIGMENT POURPRE ET SON UTILISATION

(30) Priorität: 24.03.1999 CH 55699
(43) Veröffentlichungstag der Anmeldung: 19.12.2001
(73) Patentinhaber: Ciba Specialty Chemicals Holding Inc., 4057 Basel (CH)
(72) Erfinder: HAUSER, Hanspeter, CH-4147 Aesch (CH); GRANDIDIER, Yves, F-06600 Antibes (FR); RUF, Klaus, D-79283 Bollschweil (DE)
(86) Internationale Anmeldenummer: EP0002442
(87) Internationale Veröffentlichungsnummer: WO00056819

(56) Entgegenhaltungen:
- EP-A- 0 190 999
- EP-A- 0 277 914
- EP-A- 0 524 904
- EP-A- 0 737 723
- EP-A- 0 794 235

## Beschreibung

Die Erfindung betrifft purpurfarbene Pigmentgemische enthaltend 1,4-Diketo-2,5-dihydro-3,6-diaryl-pyrrolo[3,4c]pyrrol- und Chinacridon-Pigmente in gesonderten kristallinen Phasen, welche eine hohe Farbstärke bei ausgezeichneten anderen applikatorischen Eigenschaften aufweisen. Die erfindungsgemässen Pigmente können in Drucktinten verwendet werden, insbesondere in Drucktinten für polychrome Druckerzeugnisse.

Nuance, Farbstärke, Transparenz und Viskosität sind bei Drucktinten die wichtigsten Parameter. Die Nuance muss ganz bestimmten Werten entsprechen, um zusammen mit anderen Nuancen eine möglichst breite Farbpalette zu ermöglichen, wobei meist neben purpur (magenta) auch blaugrün (cyan), gelb und schwarz verwendet werden. Dazu sollen die Farbstärke und die Transparenz hoch sein, jedoch mit einer brauchbar tiefen Viskosität.

EP 337 435 offenbart ein Verfahren zur Herstellung deckender Diketopyrrolopyrrolpigmente durch Nassmahlung in einem Alkohol/Base-System, nach welchem auch Pigment Rot 254 behandelt werden kann.

Aus EP 277 914 ist bekannt, dass Chinacridone mit Diketopyrrolo[3,4c]pyrrolen im Verhältnis 5:95 bis 95:5 Festlösungen ergeben, deren koloristischen Eigenschaften von denjenigen der Komponenten abweichen.

Diese Festlösungen werden durch allerlei Verfahren erhalten, unter anderem durch Salzknetung in Gegenwart eines organischen Lösungsmittels. Zum gleichen Resultat führen auch Trockenmahlung gefolgt von thermischer Behandlung in Gegenwart eines polaren Lösungsmittels (EP 524 904), simultane Decarboxylierung von löslichen Derivaten (EP 654 506) und Umfällung aus basischem Dimethylsulfoxid (EP 707 049), wobei das Gewichtsverhältnis von 2,9-Dichlorchinacridon zu 1,4-Diketo-2,5-dihydro-3,6-di-(4'-chlorphenyl)-pyrrolo[3,4c]pyrrol in einem Beispiel von EP 707 049 bei 3:2 liegt.

Schliesslich offenbart EP 737 723 physikalische Gemische von 1,4-Diketo-2,5-dihydro-3,6-di-(4'-biphenylyl)-pyrrolo[3,4c]pyrrol und 2,9-Dichlorchinacridon, welche eine rote Nuance und eine hohe Opazität aufweisen.

Es hat sich jedoch herausgestellt, dass diese bekannten Produkte für Drucktinten, insbesondere Polychromie-Drucktinten, immer noch nicht im gewünschten Mass geeignet sind. Die aus den bekannten Pigmenten erhältlichen Drucktinten weisen entweder eine unerwünschte Nuance auf, oder es enttäuschen die Farbstärke, die Transparenz, die Viskosität oder sogar mehrere dieser Eigenschaften gleichzeitig.

Es wurde nun herausgefunden, dass Pigmentzusammensetzungen erhalten werden können, welche sich überraschend besser für Drucktinten eignen, wenn man gewisse 1,4-Diketo-2,5-dihydro-3,6-diaryl-pyrrolo[3,4c]pyrrol- und Chinacridon-Pigmente unter solchen Bedingungen vermengt, dass die Kristallmodifikationen der Komponenten im wesentlichen erhalten bleiben, also ohne Bildung von Festlösungen oder Mischkristalle.

Darüber hinaus wurde herausgefunden, dass 1,4-Diketo-2,5-dihydro-3,6-di-(4'-chlorphenyl)-pyrrolo[3,4c]pyrrol und 2,9-Dichlorchinacridon durch Salzknetung überraschend oberflächlich passiviert werden können, so dass derart konditionierte Teilchen nicht mehr zur Bildung von Festlösungen oder Mischkristallen neigen, auch wenn sie unter Anwendung hoher Kräfte zusammen oder mit anderen Chinacridonen beziehungsweise Pyrrolo[3,4c]pyrrolen dispergiert werden, wie bei der Herstellung von Drucktinten üblich.

Die Erfindung betrifft daher eine Pigmentzusammensetzung enthaltend Pigmente der Formeln 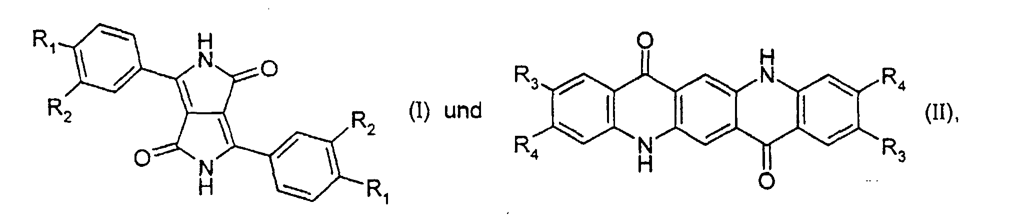 worin R₁, R₂, R₃ und R₄ unabhängig voneinander Wasserstoff, Chlor, Brom, Cyano, Trifluormethyl, C₁-C₈Alkyl, C₁-C₈Alkoxy oder C₁-C₈Alkylthio sind, dadurch gekennzeichnet, dass die Pigmente der Formeln (I) und (II) gesonderte eigene Kristallphasen haben und es sich bei mindestens einem Pigment der Formel (I) oder (II) um mit einem kristallinen anorganischen Salz und einer neutralen organischen Flüssigkeit geknetetes 1,4-Diketo-2,5-dihydro-3,6-di-(4'-chlorphenyl)-pyrrolo[3,4c]pyrrol oder 2,9-Dichlorchinacridon handelt.

Gesonderte Kristallphasen werden daran erkannt, dass das Röntgenbeugungsdiagramm der Pigmentzusammensetzung mit der gewichteten Summe der Röntgenbeugungsdiagramme der reinen Komponenten übereinstimmt. Es ist wahrscheinlich, jedoch nicht bestätigt, dass die Partikeln unterschiedlicher Kristallmodifikationen lose nebeneinander vorkommen; Aggregate unterschiedlicher Kristallmodifikationen entsprechen jedoch durchaus ebenfalls der erfindungsgemässen Definition, sofern sie keine Mischphasen oder Festlösungsbereiche aufweisen.

Beim Pigment der Formel (I) kann es sich um eine chemisch einheitliche Verbindung handeln, oder auch um ein Gemisch, eine Festlösung oder einen Mischkristall von 2 bis 4 Verbindungen der Formel (I). Beim Pigment der Formel (II) kann es sich um eine chemisch einheitliche Verbindung handeln, oder auch um ein Gemisch, eine Festlösung oder einen Mischkristall von 2 bis 4 Verbindungen der Formel (II), welche auch je von 0 bis 20 Mol% der Verbindungen der Formeln 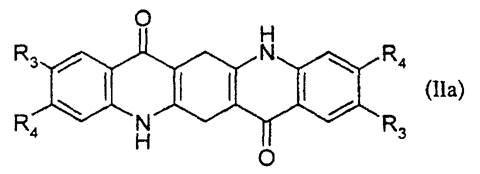 und/oder 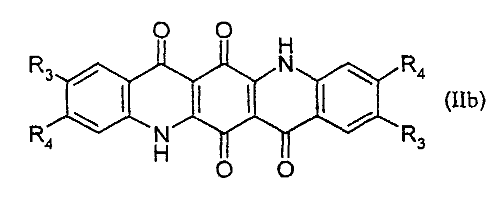 enthalten können.

Statt reinen 1,4-Diketo-2,5-dihydro-3,6-di-(4'-chlorphenyl)-pyrrolo[3,4c]pyrrols als zu knetende Komponente können auch eine monophasige Festlösung oder ein Mischkristall verwendet werden, worin 1,4-Diketo-2,5-dihydro-3,6-di-(4'-chlorphenyl)-pyrrolo[3,4c]pyrrol die Wirtphase bildet.

Statt reinen 2,9-Dichlorchinacridons als zu knetende Komponente können auch eine monophasige Festlösung oder ein Mischkristall verwendet werden, worin 2,9-Dichlorchinacridon die Wirtphase bildet.

Dagegen ist die Verwendung von Festlösungen oder Mischkristallen enthaltend gleichzeitig Verbindungen der Formeln (I) und (II) nicht zweckmässig.

Wenn es sich bei den Pigmenten der Formeln (I) und (II) um Gemische, Festlösungen oder Mischkristalle handelt, sind möglichst wenige Komponenten der Formeln (I) und/oder (II) bevorzugt, beispielsweise je 2 oder 3, bevorzugt je 2, welche je für sich oder zusammen eine stabile Kristallmodifikation bilden, insbesondere physikalische Gemische und Mischkristalle. Besonders bevorzugt wird jedoch eine einzige Verbindung der Formel (I) oder eine einzige Verbindung der Formel (II) verwendet, ganz besonders bevorzugt je nur eine Verbindung der Formeln (I) und (II).

C₁-C₈Alkyl steht zum Beispiel für Methyl, Ethyl, n-Propyl, Isopropyl, n-Butyl, sec.-Butyl, tert.-Butyl, n-Amyl, tert.-Amyl, n-Hexyl, n-Heptyl, n-Octyl, 2-Ethylhexyl oder 2,4,4-Trimethyl-2-pentyl, bevorzugt für C₁-C₄Alkyl, insbesondere für Methyl oder Ethyl. C₁-C₈Alkoxy steht zum Beispiel für -O―C₁-C₈Alkyl, bevorzugt für -O-C₁-C₄Alkyl, insbesondere für Methoxy oder Ethoxy. C₁-C₈Alkylthio steht zum Beispiel für -S-C₁- C₈Alkyl, bevorzugt für -S-C₁-C₄Alkyl, insbesondere für Methylthio oder Ethylthio.

R₁, R₂, R₃ und R₄ sind bevorzugt Chlor, Brom, Cyano, C₁-C₄Alkyl oder Trifluormethyl, besonders bevorzugt Chlor, Methyl oder Cyano, ganz besonders bevorzugt Chlor.

Bevorzugt handelt es sich beim Pigment der Formel (I) um 1,4-Diketo-2,5-dihydro-3,6-di-(4'-chlorphenyl)-pyrrolo[3,4c]pyrrol und beim Pigment der Formel (II) um Chinacridon oder 2,9-Dichlorchinacridon, besonders bevorzugt um 2,9-Dichlorchinacridon. Ganz besonders bevorzugt werden die bevorzugten Pigmente der Formeln (I) und (II) miteinander kombiniert.

Die Pigmente der Formeln (I) und (II) sind bekannt und teilweise kommerziell erhältlich. Das Gewichtsverhältnis von Pigment der Formel (I) zu Pigment der Formel (II) beträgt bevorzugt von 1,5 : 1 bis 1 : 1,2, besonders bevorzugt etwa 1 : 1.

Bei der Knetung der Pigmente der Formel (I) oder (II) betragen bevorzugt das Gewichtsverhältnis von kristallinem anorganischem Salz zu Pigment der Formel (I) oder (II) von 4 : 1 bis 12 : 1, das Verhältnis von organischer Flüssigkeit zu kristallinem anorganischem Salz von 1 ml : 6 g bis 3 ml : 7 g, und die Temperatur von -20 bis 100°C. Die Pigmentpartikeln werden zweckmässig bei der Knetung verkleinert, wobei bevorzugt ein Pigment einer spezifischen Oberfläche ≤ 40 m²/g, besonders bevorzugt von 5 bis 30 m²/g, in ein Pigment einer spezifischen Oberfläche ≥ 40 m²/g, besonders bevorzugt von 50 bis 80 m²/g, überführt wird. Die spezifische Oberfläche kann zum Beispiel mit der Stickstoffmethode bestimmt werden.

Zweckmässig ist das kristalline anorganische Salz in der neutralen organischen Flüssigkeit zu ≤ 100 mg/l bei 20°C löslich, bevorzugt ≤ 10 mg/l bei 20°C, besonders bevorzugt praktisch unlöslich bei 20°C.

Das anorganische Salz sowie die neutrale organische Flüssigkeit sind bevorzugt zu je mindestens 10 g/100 ml in Wasser löslich. Als anorganisches Salz werden bevorzugt Aluminiumsulfat, Natriumsulfat, Calciumchlorid, Kaliumchlorid oder Natriumchlorid verwendet, welche gegebenenfalls Kristallwasser enthalten können. Bevorzugt werden als neutrale organische Flüssigkeit eine Mono-, Bis- oder Tris-hydroxy-C₂-C₁₂alkan-Verbindung oder ein Polyethylenglykol oder Polypropylenglykol mit 1 bis 120 Ethergruppen, welche unsubstituiert oder mit 1 oder 2 Oxogruppen substituiert oder an einer oder mehreren Hydroxygruppen mit C₁-C₈Alkyl veräthert oder mit C₁-C₈Alkylcarbonyl verestert sein können, oder ein Gemisch davon verwendet. Beispiele neutraler organischer Flüssigkeiten sind C₂-C₅Alkohole, wie tert.-Butanol, C₂-C₁₂Alkylendiole, wie Ethylenglykol, C₃-C₁₂Alkantriole, wie Glycerin, sowie Diethylenglykol, oder deren Ether, wie Monoglym oder Diglym, deren Ester, wie Triacetin, oder deren Oxo-substituierten Derivate, wie Diacetonalkohol.

Bevorzugt beträgt die Temperatur bei der Knetung von 25 bis 60°C. Die Drehgeschwindigkeit ist, gegebenenfalls unter Berücksichtigung der Kühlung, derart einzustellen, dass eine genügende Scherung entsteht, aber ohne dass die Temperatur über den erfindungsgemässen Temperaturbereich hinaus steigt. Hervorragende Resultate werden zum Beispiel in einem Kneter von 5 I Inhalt bei Drehgeschwindigkeiten von 50 bis 150 U/Min und Knetdauer von 6 bis 24 Std erreicht, wobei diese Angaben keineswegs limitierend sind und die Drehgeschwindigkeiten zum Beispiel in grösseren Apparaturen niedriger sein können.

Die Erfindung betrifft auch ein Verfahren zur Herstellung einer Pigmentzusammensetzung enthaltend Pigmente der Formeln 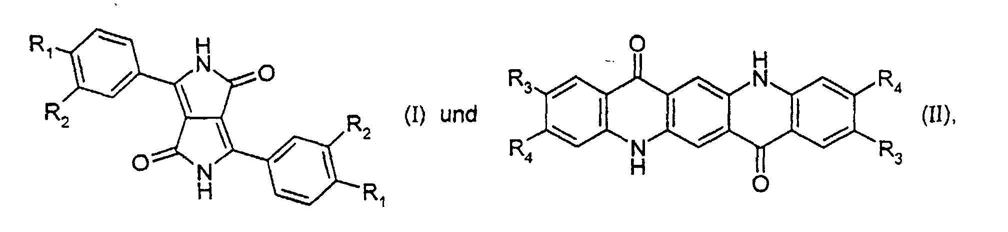 worin R₁, R₂, R₃ und R₄ unabhängig voneinander Wasserstoff, Chlor, Brom, Cyano, Trifluormethyl, C₁-C₈Alkyl, C₁-C₈Alkoxy oder C₁-C₈Alkylthio sind, wobei die Pigmente der Formeln (I) und (II) gesonderte eigene Kristallphasen haben, durch Knetung von 1,4-Diketo-2,5-dihydro-3,6-di-(4'-chlorphenyl)-pyrrolo[3,4c]pyrrol als Pigment der Formel (I) oder 2,9-Dichlorchinacridon als Pigment der Formel (II) mit einem kristallinen anorganischen Salz und einer neutralen organischen Flüssigkeit, Auswaschen des kristallinen anorganischen Salzes sowie der neutralen organischen Flüssigkeit, Trocknung und Mischung mit der jeweils anderen Komponente der Formel (II) oder (I).

Die bevorzugten Knetungsbedingungen sind oben aufgeführt. Bevorzugt wird mit Wasser, insbesondere entmineralisiertem Wasser, ausgewaschen. Die Trocknung wird bevorzugt bei -20 bis 250°C / 10⁻¹ bis 10⁵ Pa durchgeführt, besonders bevorzugt bei 25 bis 100°C / 10² bis 10⁵ Pa oder 100 bis 200°C / 10⁴ bis 10⁵ Pa, ganz besonders bevorzugt um 80°C / 10⁴ Pa. Die Mischung kann in einem handelsüblichen Mischer erfolgen, zum Beispiel einer Drehtrommel mit Mischflügein, wobei zweckmässig eine Apparatur verwendet werden soll, worin die Partikeln physikalisch im wesentlichen nicht verändert werden. Aus diesem Grunde sollen Trockenmühlen zu diesem Zweck bevorzugt nicht, oder dann nur unter sehr schonenden Bedingungen verwendet werden.

Das Mischen der zweiten Komponente kann zu einem beliebigen Zeitpunkt erfolgen, zum Beispiel nach der Trocknung der ersten Komponente oder auch schon vor dem Auswaschen, wobei in diesem Falle der Kneter selbst als Mischer verwendet werden kann.

Bevorzugt werden beide Komponenten der Formeln (I) und (II) geknetet, besonders bevorzugt beide gemäss den oben angegebenen bevorzugten Bedingungen.

Die erfindungsgemäss erhaltenen Pigmentzusammensetzungen zeichnen sich insbesondere durch eine ganz erstaunlich hohe Farbstärke aus. Sie weisen sehr attraktive purpurfarbene Nuancen mit ausgezeichneten Echtheiten, guter Transparenz und gutem Glanz auf. Zudem kann eine bestimmte Nuance mit einem tieferen Verhältnis Chinacridon zu Diketopyrrolo-[3,4c]pyrrol als in Festlösungen erreicht werden, was angesichts der bekannten sehr guten allgemeinen applikatorischen Eigenschaften der Diketopyrrolo[3,4c]pyrrole, insbesondere angesichts deren ausserordentlich hohen Buntheit, sehr vorteilhaft ist.

Bevorzugt wird mit einer Drucktinte auf Nitrocellulose-Basis, im Tiefdruck auf Standard HIFI-Papier (Sihl-Eica) gedruckt, Applikationsmenge nach Trocknung total 0,80 g/m², davon Buntpigment 0,06 g/m², einen Farbtonwinkel h von 350 bis 360 oder 0 bis 10 mit einer Buntheit C* von mindestens 30 erreicht, besonders bevorzugt einen Farbtonwinkel h von 0 bis 5 bei einer Buntheit C* von mindestens 33 (CIE-Norm 1976).

Die erfindungsgemässe oberflächliche Passivierung hält zudem hohe Press- und Scherkräfte aus. Daher ist es überraschend möglich, die erfindungsgemäss erhältlichen Pigmentzusammensetzungen unter Erhaltung deren koloristischen Vorteile in Kugel- oder Perlmühlen zu dispergieren, wobei besonders vorteilhaft die Viskosität auch hochkonzentrierter Dispersionen sehr befriedigend ist.

Mit dem äusserst überraschenden Vorteil einer viel effizienteren Knetung können beide Komponenten der Formeln (I) und (II) sogar gemeinsam geknetet werden. Dadurch ist insbesondere eine kürzere Knetdauer zur Erreichung bestimmter Partikelgrössen und spezifischen Oberflächen möglich. Zum Beispiel kann die Knetdauer in einem Kneter von 5 l Inhalt bei Drehgeschwindigkeiten von 50 bis 120 U/Min auf 4 bis 12 Std verkürzt werden.

Die Variante der gemeinsamen Knetung ist daher bevorzugt, insbesondere im Fall der bevorzugten Kombinationen von Pigmenten der Formeln (I) und (II).

Die Erfindung betrifft daher auch ein Verfahren zur Herstellung einer Pigmentzusammensetzung enthahend Pigmente der Formeln 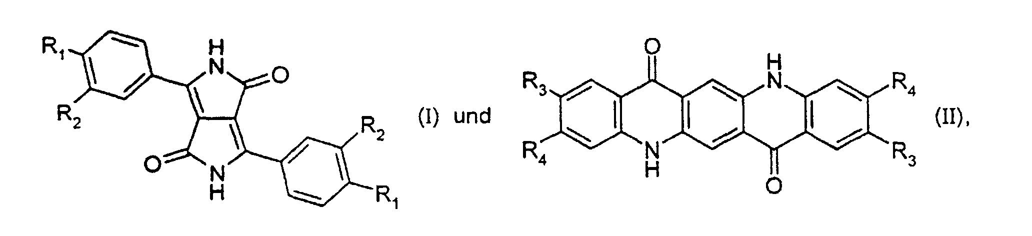 worin R₁, R₂, R₃ und R₄ unabhängig voneinander Wasserstoff, Chlor, Brom, Cyano, Trifluormethyl, C₁-C₈Alkyl, C₁-C₈Alkoxy oder C₁-C₈Alkylthio sind, wobei die Pigmente der Formeln (I) und (II) gesonderte eigene Kristallphasen haben, durch
- gemeinsame Knetung von 1,4-Diketo-2,5-dihydro-3,6-di-(4'-chlorphenyl)-pyn-olo[3,4c]-pyrrol und eines Pigments der Formel (II) oder gemeinsame Knetung von 2,9-Dichlorchinacridon und eines Pigments der Formel (I), mit einem kristallinen anorganischen Salz und einer neutralen organischen Flüssigkeit,
- Auswaschen des kristallinen anorganischen Salzes sowie der neutralen organischen Flüssigkeit, und
- Trocknung.

Die Erfindung betrifft weiterhin auch ein Verfahren zur Herstellung einer Pigmentdispersion in einer Kugel- oder Perlmühle, dadurch gekennzeichnet, dass Pigmente der Formeln 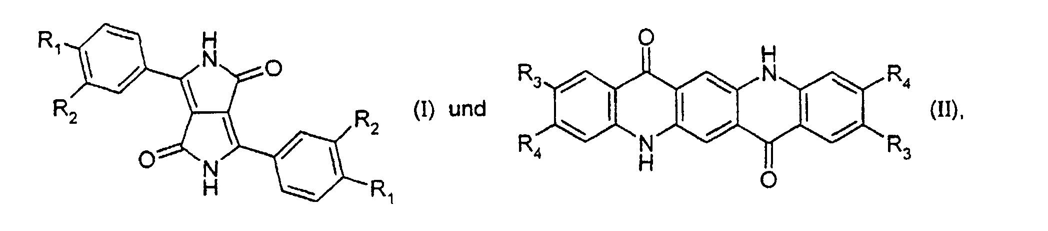 worin R₁, R₂, R₃ und R₄ unabhängig voneinander Wasserstoff, Chlor, Brom, Cyano, Trifluormethyl, C₁-C₈Alkyl, C₁-C₈Alkoxy oder C₁-C₈Alkylthio sind, verwendet werden, wobei die Pigmente der Formeln (I) und (II) gesonderte eigene Kristallphasen haben und es sich bei mindestens einem Pigment der Formel (I) oder (II) um mit einem kristallinen anorganischen Salz und einer neutralen organischen Flüssigkeit geknetetes 1,4-Diketo-2,5-dihydro-3,6-di-(4'-chlorphenyl)-pyrrolo[3,4c]pyrrol oder 2,9-Dichlorchinacridon handelt.

Als flüssige Phase für die Dispersion kann ein beliebiges, übliches Dispergiermedium verwendet werden, zum Beispiel eine Lösung von Ethyl- und/oder Nitrocellulose und/oder einem anderen bekannten Kunstlack in einem oder mehreren Lösungsmitteln, zum Beispiel organischen Lösungsmitteln wie Ethoxypropanol, Ethanol, Dioctylphthalat oder Toluol, oder auch Wasser. Für die beabsichtigte Applikation übliche weitere Zusätze können ebenfalls verwendet werden.

Dem Fachmann sind die Herstellung von Pigmentdispersionen in der Kugel- oder Perlmühle und die dazu verwendbaren flüssigen Phasen bestens bekannt, so dass dies keiner weiteren Erläuterung bedarf.

Die erfindungsgemäss hergestellten Dispersionen eignen sich vorzüglich insbesondere als Konzentrate zur Herstellung von Drucktinten, welche ausgezeichnete applikatorische aufweisen, insbesondere eine attraktive purpurfarbene Koloristik mit hoher Farbstärke.

Die Erfindung betrifft daher auch eine Drucktinte oder ein Drucktintenkonzentrat enthaltend eine erfindungsgemässe Pigmentzusammensetzung.

Unter Drucktinte wird eine flüssige oder pastöse Dispersion verstanden, welche Farbmittel, Bindemittel sowie gegebenenfalls Lösemittel und Additive enthält. Üblicherweise sind in einer flüssigen Drucktinte das Bindemittel und gegebenenfalls die Additive im Lösemittel gelöst. Übliche Viskositäten im Brookfield-Viskosimeter sind von 0,1 bis 20 Pa·s (Spindel N° 4, 10 U/Min). Unter Drucktintenkonzentraten werden Zusammensetzungen verstanden, woraus durch Verdünnung Drucktinten erhalten werden können. Zutaten und Zusammensetzungen von Drucktinten und Drucktintenkonzentraten sind dem Fachmann vertraut.

Die Erfindung betrifft ebenfalls eine Drucktinte enthaltend Pigmente der Formeln 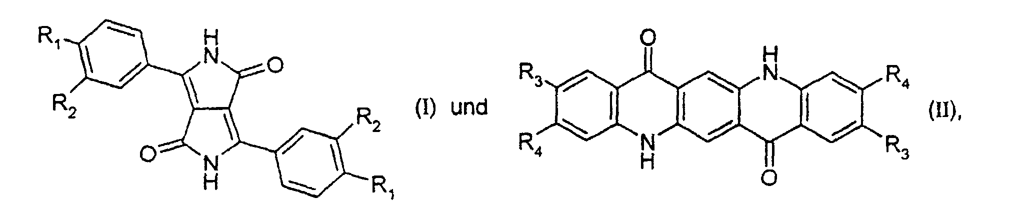 worin R₁, R₂, R₃ und R₄ unabhängig voneinander Wasserstoff, Chlor, Brom, Cyano, Trifluormethyl, C₁-C₈Alkyl, C₁-C₈Alkoxy oder C₁-C₈Alkylthio sind, dadurch gekennzeichnet, dass die Pigmente der Formeln (I) und (II) gesonderte eigene Kristallphasen haben, das Gewichtsverhältnis von Pigment der Formel (I) zu Pigment der Formel (II) von 1,5:1 bis 1:1,2 beträgt und die Drucktinte bei einer Buntpigment-Applikationsmenge von 0,06 g/m² auf weissem Untergrund nach Trocknung einen Farbtonwinkel h von 350 bis 360 oder 0 bis 10 mit einer Buntheit C* von mindestens 30 erreicht.

Diese Drucktinte enthält bevorzugt 1,4-Diketo-2,5-dihydro-3,6-di-(4'-chlorphenyl)-pyrrolo[3,4c]pyrrol als Pigment der Formel (I) oder 2,9-Dichlorchinacridon als Pigment der Formel (II), besonders bevorzugt beide.

Zusätzlich zu den Pigmenten der Formeln (I) und (II), sowie gegebenenfalls (IIa) und/oder (IIb), können in den erfindungsgemässen Pigmentzusammensetzungen oder Pigmentdispersionen weitere Pigmente enthalten sein, beziehungsweise bei den erfindungsgemässen Verfahren weitere Pigmente mit verwendet werden, vorausgesetzt die Kristalleigenschaften der Pigmente der Formeln (I) und (II) werden dadurch im wesentlichen nicht verändert, was röntgenkristallographisch leicht festzustellen ist. Als zusätzliche Pigmente werden beliebige anorganische oder organische Weiss-, Schwarz- oder Buntpigmente verstanden, ausgenommen 1,4-Diketo-2,5-dihydro-3,6-diaryl-pyrrolo[3,4c]pyrrole und Chinacridone.

Zusätzliche Buntpigmente werden in den erfindungsgemässen Pigmentzusammensetzungen oder Pigmentdispersionen bevorzugt in kleinen Mengen von 0 bis 20 Gew.% verwendet, insbesondere 0 bis 10 Gew.%, bezogen auf das Gesamtgewicht aller Verbindungen der Formeln (I), (II), (IIa) und (IIb). Besonders bevorzugt werden jedoch keine zusätzlichen Buntpigmente verwendet.

Die erfindungsgemässen Drucktinten enthalten die Verbindungen der Formeln (I), (II), (IIa) und (IIb) zweckmässig in einer Konzentration von 0,01 bis 75 Gew.%, bevorzugt von 1 bis 50 Gew.%, insbesondere 5 bis 40 Gew.%, besonders bevorzugt 10 bis 25 Gew.%, bezogen auf das Gesamtgewicht der Drucktinte, und können zum Beispiel für den Tiefdruck, Flexodruck, Siebdruck, Offsetdruck oder kontinuierlichen oder tropfenweisen Tintenstrahldruck auf Papier, Pappe, Metall, Holz, Leder, Kunststoff oder Textilien, oder auch in speziellen Anwendungen nach allgemein bekannten Rezepturen verwendet werden, zum Beispiel im Verlag-, Verpackungs- oder Versandwesen, in der Logistik, der Werbung, im Sicherheitsdruck oder auch im Bürobereich für Kugelschreiber, Filzstifte, Faserstifte, Stempelkissen, Farbbändern oder Tintenstrahldruckerpatronen.

Für den Tief- oder Flexodruck wird üblicherweise aus einem Drucktinten-Konzentrat durch Verdünnung eine Drucktinte hergestellt, die dann nach an sich bekannten Methoden eingesetzt werden kann. Konzentrate enthaltend die erfindungsgemässen Pigmentzusammensetzungen eignen sich dabei besonders gut.

Die erfindungsgemässen Pigmentzusammensetzungen eignen sich auch zur Herstellung von festen Tonern und Wachstransferbändern, als Pigmente in Farbfiltern oder zur Färbung hochmolekularer organischer Materialien in der Masse.

Das erfindungsgemäss zu färbende hochmolekulare organische Material kann natürlicher oder künstlicher Herkunft sein und weist üblicherweise ein Molekulargewicht im Bereich von 10³ bis 10⁸ g/mol auf. Es kann sich zum Beispiel um Naturharze oder trocknende Öle, Kautschuk oder Casein oder um abgewandelte Naturstoffe, wie Chlorkautschuk, ölmodifizierte Alkydharze, Viscose, um Celluloseether oder Ester, wie Celluloseacetat, Cellulosepropionat, Celluloseacetobutyrat oder Nitrocellulose handeln, insbesondere aber um vollsynthetische organische Polymere (sowohl Duroplaste als auch Thermoplaste), wie sie durch Polymerisation, Polykondensation oder Polyaddition erhalten werden, zum Beispiel Polyolefine wie Polyethylen, Polypropylen oder Polyisobutylen, substituierte Polyolefine wie Polymerisate aus Vinylchlorid, Vinylacetat, Styrol, Acrylnitril der Acrylsäure- und/oder Methacrylsäureester oder Butadien sowie Copolymerisate der erwähnten Monomeren, insbesondere ABS oder EVA.

Aus der Reihe der Polyadditionsharze und Polykondensationsharze seien die Kondensationsprodukte von Formaldehyd mit Phenolen, die sogenannten Phenoplaste, und die Kondensationsprodukte von Formaldehyd mit Harnstoff, Thioharnstoff und Melamin, die sogenannten Aminoplaste die als Lackharze verwendeten Polyester, und zwar sowohl gesättigte, wie Alkydharze, als auch ungesättigte, wie Maleinatharze, ferner die linearen Polyester und Polyamide oder Silikone genannt.

Die erwähnten hochmolekularen Verbindungen können einzeln oder in Gemischen, als plastische Massen oder Schmelzen, die gegebenenfalls zu Fasern versponnen werden können, vorliegen.

Sie können auch in Form ihrer Monomeren oder im polymerisierten Zustand in gelöster Form als Filmbildner oder Bindemittel für Lacke oder Drucktinten vorliegen, wie Leinölfirnis, Nitrocellulose, Alkydharze, Melaminharze, Harnstoff-Formaldehydharze oder Acrylharze.

Die Pigmentierung der hochmolekularen, organischen Substanzen mit den erfindungsgemässen Pigmentzusammensetzungen erfolgt beispielsweise derart, dass man ein solches Pigment gegebenenfalls in Form von Masterbatches, diesen Substraten unter Verwendung von Walzwerken, Misch- oder Mahlapparaten zumischt. Das pigmentierte Material wird in der Regel hierauf nach an sich bekannten Verfahren wie Kalandrieren, Pressen, Strangpressen, Streichen, Giessen oder durch Spritzguss in die gewünschte endgültige Form gebracht. Oft ist es erwünscht, zur Herstellung von nicht starren Formlingen oder zur Verringerung ihrer Sprödigkeit den hochmolekularen Verbindungen vor der Verformung sogenannte Weichmacher einzuverleiben. Als solche können zum Beispiel Ester der Phosphorsäure, Phthalsäure oder Sebacinsäure dienen. Die Weichmacher können im erfindungsgemässen Verfahren vor oder nach der Einverleibung des Pigmentfarbstoffes in die Polymeren eingearbeitet werden. Es ist ferner möglich, zwecks Erzielung verschiedener Farbtöne, den hochmolekularen, organischen Stoffen neben den Pigmentzusammensetzungen noch Füllstoffe bzw. andere farbgebende Bestandteile wie Weiss-, Bunt- oder Schwarzpigmente sowie Effektpigmente in der jeweils gewünschten Menge zuzufügen.

Zum Pigmentieren von Lacken und Drucktinten werden die hochmolekularen organischen Materialien und die erfindungsgemässen Pigmentzusammensetzungen, gegebenenfalls zusammen mit Zusatzstoffen wie Füllmitteln, anderen Pigmenten, Siccativen oder Weichmachern, im allgemeinen in einem organischen und/oder wässrigen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst hierauf alle Komponenten zusammenbringt.

Eine weitere Ausführungsform betrifft daher auch in der Masse gefärbtes hochmolekulares organisches Material enthaltend
(a) 0,05 bis 70 Gew.-%, bezogen auf die Summe aus (a) und (b), einer erfindungsgemässen Pigmentzusammensetzung, und
(b) 99,95 bis 30 Gew.-%, bezogen auf die Summe aus (a) und (b), eines hochmolekularen organischen Materials.

Dabei kann es sich sowohl um eine gebrauchsfertige Zusammensetzung oder einen daraus geformten Gegenstand handeln, als auch um einen Masterbatch, beispielsweise in Form eines Granulats. Gegebenenfalls kann das erfindungsgemäss gefärbte hochmolekulare organische Material auch übliche Zusatzstoffe enthalten, zum Beispiel Stabilisatoren.

Eine weitere Ausführungsform betrifft daher auch ein Verfahren zur Färbung von hochmolekularem organischen Material in der eine Masse, dadurch gekennzeichnet, dass eine erfindungsgemässe Pigmentzusammensetzung verwendet wird, beispielsweise indem man das hochmolekulare organische Material mit der erfindungsgemässen Pigmentzusammensetzung, gegebenenfalls in Form eines Masterbatches, in an sich bekannter Weise mischt und verarbeitet. Dies kann beispielsweise in einer Perlmühle, einem Extruder oder einem Walzgerät beliebigen Bautyps erfolgen.

Die nachfolgenden Beispiele erläutern die Erfindung, ohne deren Umfang einzuschränken (wo nicht anders angegeben, handelt es sich bei "%" immer um Gewichts-%):

Beispiel 1: Ein Laborkneter von 5 I Inhalt wird mit 175 g Irgazin® DPP Red BO (Colour Index Pigment Red 254, 15 m²/g), 175 g Cinquasia® Magenta L RT-265-D (Colour Index Pigment Rot 202, 21 m²/g) 1400 g Natriumchlorid und 350 ml Diethylenglykol beschickt und die Drehzahl wird auf 50 U/Min eingestellt. Die Wände des Kneters werden auf 25°C gekühlt, so dass die Temperatur in der Masse 30°C nicht übersteigt. Nach 12 Stunden gibt man langsam 2500 ml entionisiertes Wasser zu, entlässt das erhaltene Gemisch auf einen Büchner-Trichter und wäscht mit Wasser nach, bis das Waschwasser salzfrei ist. Das Produkt wird bei 80°C / 3·10³ Pa während 15 Stunden getrocknet.

- Beispiel 2: Ein Laborkneter von 5 1 Inhalt wird mit 175 g Irgazin® DPP Red BO (Colour Index Pigment Red 254, 15 m²/g), 175 g Cinquasia® Magenta L RT-265-D (Colour Index Pigment Rot 202, 21 m²/g) 2100 g Natriumchlorid und 600 ml Diacetonalkohol beschickt und die Drehzahl wird auf 80 U/Min eingestellt. Die Wände des Kneters werden auf 25°C gekühlt, so dass die Temperatur in der Masse 40°C nicht übersteigt. Nach 10 Stunden gibt man langsam 1000 ml entionisiertes Wasser zu, entlässt das erhaltene Gemisch auf einen Büchner-Trichter und wäscht mit Wasser nach, bis das Waschwasser salzfrei ist. Das Produkt wird bei 80°C / 3·10³ Pa während 15 Stunden getrocknet.

Beispiel 3: Ein Laborkneter von 10 l Inhalt wird mit 175 g Irgazin® DPP Red BO (Colour Index Pigment Red 254, 15 m²/g), 175 g Cinquasia® Magenta L RT-265-D (Colour Index Pigment Rot 202, 21 m²/g) 4200 g Calciumchlorid wasserfrei und 2000 ml N-Methyl-pyrrolidon beschickt und die Drehzahl wird auf 120 U/Min eingestellt. Die Wände des Kneters werden auf 25°C gekühlt, so dass die Temperatur in der Masse 60°C nicht übersteigt. Nach 4 Stunden gibt man langsam 5000 ml entionisiertes Wasser zu, entlässt das erhaltene Gemisch auf einen Büchner-Trichter und wäscht mit Wasser nach, bis das Waschwasser salzfrei ist. Das Produkt wird bei 80°C / 3·10³ Pa während 15 Stunden getrocknet.

Beispiel 4: Ein Laborkneter von 5 l Inhalt wird mit 210 g Irgazin® DPP Red BO (Colour Index Pigment Red 254, 15 m²/g), 140 g Cinquasia® Violet NRT-201-D (Colour Index Pigment Violet 19, β-Modifikation, 70 m²/g) 2100 g Natriumchlorid und 600 ml Diacetonalkohol beschickt und die Drehzahl wird auf 80 U/Min eingestellt. Die Wände des Kneters werden auf 25°C gekühlt, so dass die Temperatur in der Masse 50°C nicht übersteigt. Nach 8 Stunden gibt man langsam 1500 ml entionisiertes Wasser zu, entlässt das erhaltene Gemisch auf einen Büchner-Trichter und wäscht mit Wasser nach, bis das Waschwasser salzfrei ist. Das Produkt wird bei 80°C / 3·10³ Pa während 15 Stunden getrocknet.

Beispiel 5: 39,60 g Nitrocellulose, 15,84 g Ethylcellulose, 2,64 g modifiziertes Ketonformaldehydharz und 10,56 g Dioctylphthalat werden in 26,40 g Ethoxypropanol, 52,80 g Ethylacetat und 116,16 g Ethanol gelöst. 36,00 g des Produktes gemäss Beispiel 1 werden mit einem Schnellrührer bei 6000 U/Min während 15 Minuten darin vordispergiert. Die Suspension wird dann in eine 125 ml Perlmühle mit Dissolveraufsatz transferiert (Dispermat SL™; Hediger), die mit 207 g Zirkonkeramikkugeln des Durchmessers 1,0 bis 1,2 mm (Hermann Oeckel Ingenieur GmbH, D-95100 Selb) beschickt ist. Dann wird 15 Minuten bei 4000 U/Min dispergiert. Eine gebrauchsfertige Drucktinte wird durch Verdünnung dieses Konzentrats mit einer Lösung von 222,75 g Nitrocellulose, 89,10 g Ethylcellulose, 14,85 g modifiziertes Ketonformaldehydharz und 59,40 g Dioctylphthalat in 148,50 g Ethoxypropanol, 297 g Ethylacetat und 1868,40 g Ethanol im Schnellrührer während 15 Minuten erhalten. Mit dieser Drucktinte und einer handelsübliche Tiefdruckmaschine (Rotova™; Rotocolor AG) wird auf Standard HIFI-Papier (Sihl-Eica) gedruckt, wobei der Feststoffanteil nach Trocknung 0.80 g/m² beträgt. Man erhält einen brillanten und transparenten, purpurfarbenen Druck mit folgenden Farbkoordinaten: L* = 67, C* = 37, h= 2.

Beispiel 6 Man verfährt analog zu Beispiel 5, verwendet jedoch das Produkt gemäss Beispiel 4 anstatt des Produkts gemäss Beispiel 1. Man erhält einen brillanten und transparenten, purpurfarbenen Druck mit folgenden Farbkoordinaten: L* =61, C* = 41, h= 2.

Beispiele 7-8: Man verfährt analog zu Beispiel 5, verwendet jedoch die Produkte gemäss den Beispielen 2 und 3 anstatt des Produkts gemäss Beispiel 1. Die Resultate sind praktisch identisch, wie in Beispiel 5 (ΔE*≤2).

Beispiel 9 : Ein Laborkneter von 0,75 l Inhalt wird mit 22,5 g Irgazin® DPP Red BO (Colour Index Pigment Red 254, 15 m²/g), 22,5 g Cromophtal® Pink PT (Colour Index Pigment Red 122, 63,2 m²/g), 360 g Natriumchlorid und 104 ml Diacetonalkohol beschickt und die Drehzahl wird auf 80 U/Min eingestellt. Die Wände des Kneters werden auf 25°C gekühlt, so dass die Temperatur in der Masse 40°C nicht übersteigt. Nach 10 Stunden gibt man langsam 150 ml entionisiertes Wasser zu, entlässt das erhaltene Gemisch auf einen Büchner-Tnchter und wäscht mit Wasser nach, bis das Waschwasser salfrei ist. Das Produkt wird bei 80°C / 3·10³ Pa während 15 Stunden getrocknet.

Beispiel 10: Ein Laborkneter von 0,75 1 inhalt wird mit 27 g Irgazin® DPP Red BO (Colour Index Pigment Red 254, 15 m²/g), 18 g Cromophtal® Pink PT (Colour Index Pigment Red 122, 63,2 m²/g), 360 g Natriumchlorid und 104 ml Diacetonalkohol beschickt und die Drehzahl wird auf 80 U/Min eingestellt. Die Wände des Kneters werden auf 25°C gekühlt, so dass die Temperatur in der Masse 40°C nicht übersteigt. Nach 10 Stunden gibt man langsam 150 ml entionisiertes Wasser zu, entlässt das erhaltene Gemisch auf einen Büchner-Trichter und wäscht mit Wasser nach, bis das Waschwasser salfrei ist. Das Produkt wird bei 80°C / 3·10³ Pa während 15 Stunden getrocknet.

Beispiele 11-12: Man verfährt analog zu Beispiel 5, verwendet jedoch die Produkte gemäss den Beispielen 9 und 10 anstatt des Produkts gemäss Beispiel 1. Die koloristischen Resultate sind in beiden Fällen ausgezeichnet.

Vergleichsbeispiel: Man verfährt analog zu Beispiel 5, verwendet jedoch Cinquasia® Brilliant Red RT-380-D (Festlösung bestehend aus 40 Gew.% 1,4-Diketo-2,5-dihydro-3,6-di-(4'-chlorphenyl)-pyrrolo[3,4c]pyrrol und 60 Gew.% 2,9-Dichlorchinacridon, 78 m²/g) anstatt des Produkts gemäss Beispiel 1. Die Viskosität des Konzentrats ist im Brookfield-Viskosimeter mit Spindel N° 4 je nach Drehzahl 6,8-9,5× höher, als diejenige des Konzentrats gemäss Beispiel 5. Nach 24 Stunden Standzeit ist im Gegensatz zur Drucktinte gemäss Beispiel 5 eine sehr deutliche Flockulation feststellbar. Die Viskosität der Drucktinte in der Ford Cup N° 4 ist 2,2× höher, als diejenige der Drucktinte gemäss Beispiel 5. Mit einem ebenfalls auf 0,80 g/m² nach Trocknung eingestellten Feststoffanteil erhält man beim Tiefdruck einen purpurfarbenen, jedoch um mindestens 21% farbschwächeren Druck, als im Beispiel 5. Die Farbstärke ist auch um mindestens 7% schwächer, als im Beispiel 6.

## Patentansprüche

1. Pigmentzusammensetzung enthaltend Pigmente der Formeln 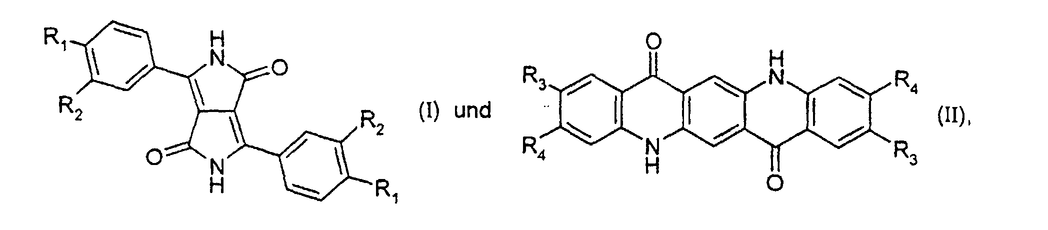 worin R₁, R₂, R₃ und R₄ unabhängig voneinander Wasserstoff, Chlor, Brom, Cyano, Trifluormethyl, C₁-C₈Alkyl, C₁-C₈Alkoxy oder C₁-C₈Alkylthio sind, **dadurch gekennzeichnet, dass** die Pigmente der Formeln (I) und (II) gesonderte eigene Kristallphasen haben und es sich bei mindestens einem Pigment der Formel (I) oder (II) um mit einem kristallinen anorganischen Salz und einer neutralen organischen Flüssigkeit geknetetes 1,4-Diketo-2,5-dihydro-3,6-di-(4'-chlorphenyl)-pyrrolo[3,4c]pyrrol oder 2,9-Dichlorchinacridon handelt.

2. Verfahren zur Herstellung einer Pigmentzusammensetzung enthaltend Pigmente der Formeln 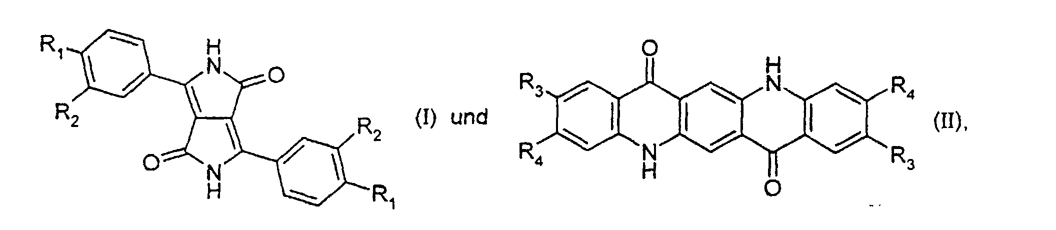 worin R₁, R₂, R₃ und R₄ unabhängig voneinander Wasserstoff, Chlor, Brom, Cyano, Trifluormethyl, C₁-C₈Alkyl, C₁-C₈Alkoxy oder C₁-C₈Alkylthio sind, wobei die Pigmente der Formeln (I) und (II) gesonderte eigene Kristallphasen haben, durch Knetung von 1,4-Diketo-2,5-dihydro-3,6-di-(4'-chlorphenyl)-pyrrolo[3,4c]pyrrol als Pigment der Formel (I) oder 2,9-Dichlorchinacridon als Pigment der Formel (II) mit einem kristallinen anorganischen Salz und einer neutralen organischen Flüssigkeit, Auswaschen des kristallinen anorganischen Salzes sowie der neutralen organischen Flüssigkeit, Trocknung und Mischung mit der jeweils anderen Komponente der Formel (II) oder (I).

3. Verfahren zur Herstellung einer Pigmentzusammensetzung enthaltend Pigmente der Formeln 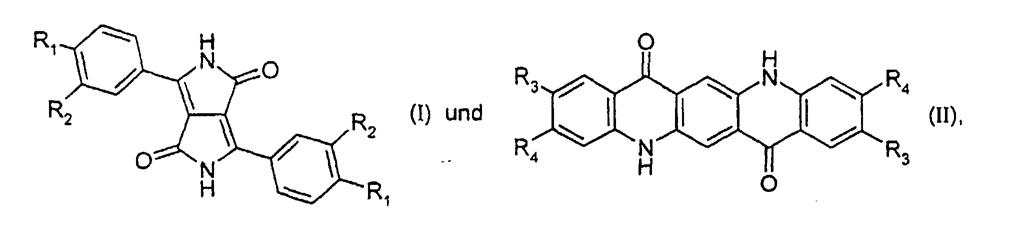 worin R₁, R₂, R₃ und R₄ unabhängig voneinander Wasserstoff, Chlor, Brom, Cyano, Trifluormethyl, C₁-C₈Alkyl, C₁-C₈Alkoxy oder C₁-C₈Alkylthio sind, wobei die Pigmente der Formeln (I) und (II) gesonderte eigene Kristallphasen haben, durch
• gemeinsame Knetung von 1,4-Diketo-2,5-dihydro-3,6-di-(4'-chlorphenyl)-pyrrolo[3,4c]-pyrrol und eines Pigments der Formel (II) oder gemeinsame Knetung von 2,9-Dichlorchinacridon und eines Pigments der Formel (I), mit einem kristallinen anorganischen Salz und einer neutralen organischen Flüssigkeit,
• Auswaschen des kristallinen anorganischen Salzes sowie der neutralen organischen Flüssigkeit, und
• Trocknung.

4. Verfahren zur Herstellung einer Pigmentdispersion in einer Kugel- oder Perlmühle, **dadurch gekennzeichnet, dass** Pigmente der Formeln 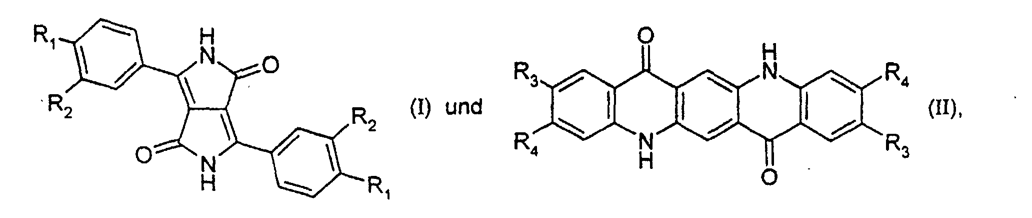 worin R₁, R₂, R₃ und R₄ unabhängig voneinander Wasserstoff, Chlor, Brom, Cyano, Trifluormethyl, C₁-C₈Alkyl, C₁-C₈Alkoxy oder C₁-C₈Alkylthio sind, verwendet werden, wobei die Pigmente der Formeln (I) und (II) gesonderte eigene Kristallphasen haben und es sich bei mindestens einem Pigment der Formel (I) oder (II) um mit einem kristallinen anorganischen Salz und einer neutralen organischen Flüssigkeit geknetetes 1,4-Diketo-2,5-dihydro-3,6-di-(4'-chlorphenyl)-pyrrolo[3,4c]pyrrol oder 2,9-Dichlorchinacridon handelt.

5. Drucktinte oder Drucktintenkonzentrat enthaltend eine Pigmentzusammensetzung gemäss Anspruch 1.

6. Drucktinte enthaltend Pigmente der Formeln 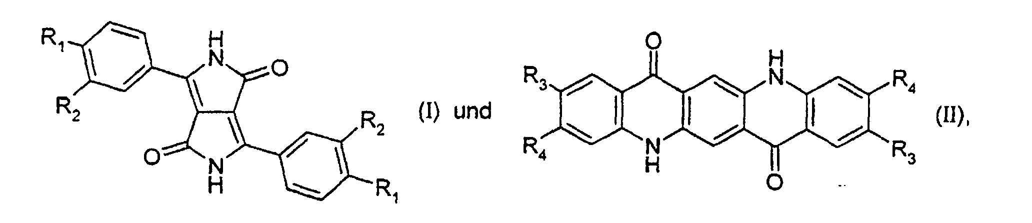 worin R₁, R₂, R₃ und R₄ unabhängig voneinander Wasserstoff, Chlor, Brom, Cyano, Trifluormethyl, C₁-C₈Alkyl, C₁-C₈Alkoxy oder C₁-C₈Alkylthio sind, **dadurch gekennzeichnet, dass** die Pigmente der Formeln (I) und (II) gesonderte eigene Kristallphasen haben, das Gewichtsverhältnis von Pigment der Formel (I) zu Pigment der Formel (II) von 1,5 : 1 bis 1 : 1,2 beträgt und die Drucktinte bei einer Buntpigment-Applikationsmenge von 0,06 g/m² auf weissem Untergrund nach Trocknung einen Farbtonwinkel h von 350 bis 360 oder 0 bis 10 mit einer Buntheit C* von mindestens 30 erreicht.

7. Pigmentzusammensetzung gemäss Anspruch 1, Verfahren gemäss Anspruch 2, 3 oder 4, oder Drucktinte oder Drucktintenkonzentrat gemäss Anspruch 5, worin beide Komponenten der Formeln (I) und (II) geknetet werden.

8. Pigmentzusammensetzung gemäss Anspruch 1, Verfahren gemäss Anspruch 2, 3 oder 4, oder Drucktinte oder Drucktintenkonzentrat gemäss Anspruch 5 oder 6, worin es sich beim Pigment der Formel (I) um 1,4-Diketo-2,5-dihydro-3,6-di-(4'-chlorphenyl)-pyrrolo[3,4c]pyrrol handelt.

9. Pigmentzusammensetzung gemäss Anspruch 1, Verfahren gemäss Anspruch 2, 3 oder 4, oder Drucktinte oder Drucktintenkonzentrat gemäss Anspruch 5 oder 6, worin es sich beim Pigment der Formel (II) um Chinacridon oder 2,9-Dichlorchinacridon, bevorzugt um 2,9-Dichlorchinacridon handelt.

10. Pigmentzusammensetzung, Verfahren, Drucktinte oder Drucktintenkonzentrat gemäss Anspruch 8, worin es sich beim Pigment der Formel (II) um Chinacridon oder 2,9-Dichlorchinacridon, bevorzugt um 2,9-Dichlorchinacridon handelt.

11. Pigmentzusammensetzung gemäss Anspruch 1, Verfahren gemäss Anspruch 2, 3 oder 4, oder Drucktinte oder Drucktintenkonzentrat gemäss Anspruch 5, worin die spezifische Oberfläche bei der Knetung von ≤40 m²/g auf ≥40 m²/g erhöht wird.

12. Pigmentzusammensetzung gemäss Anspruch 1, Verfahren gemäss Anspruch 2, 3 oder 4, oder Drucktinte oder Drucktintenkonzentrat gemäss Anspruch 5, worin als anorganisches Salz und als neutrale organische Flüssigkeit eine Mono-, Bis- oder Tris-hydroxy-C₂-C₁₂alkan-Verbindung oder ein Polyethylenglykol oder Polypropylenglykol mit 1 bis 120 Ethergruppen, welche unsubstituiert oder mit 1 oder 2 Oxogruppen substituiert oder an einer oder mehreren Hydroxygruppen mit C₁-C₈Alkyl veräthert oder mit C₁-C₈Alkylcarbonyl verestert sein können, oder ein Gemisch davon verwendet werden.

13. Pigmentzusammensetzung gemäss Anspruch 1, Verfahren gemäss Anspruch 2, 3 oder 4, oder Drucktinte oder Drucktintenkonzentrat gemäss Anspruch 5, worin die Temperatur bei der Knetung von -20 bis 100°C beträgt.

14. In der Masse gefärbtes hochmolekulares organisches Material enthaltend
(a) 0,05 bis 70 Gew.-%, bezogen auf die Summe aus (a) und (b), einer Pigmentzusammensetzung gemäss Anspruch 1, und
(b) 99,95 bis 30 Gew.-%, bezogen auf die Summe aus (a) und (b), eines hochmolekularen organischen Materials.

15. Verfahren zur Färbung von hochmolekularem organischen Material in der eine Masse, **dadurch gekennzeichnet, dass** eine Pigmentzusammensetzung gemäss Anspruch 1 verwendet wird.

## Claims

1. A pigment composition comprising pigments of formulae 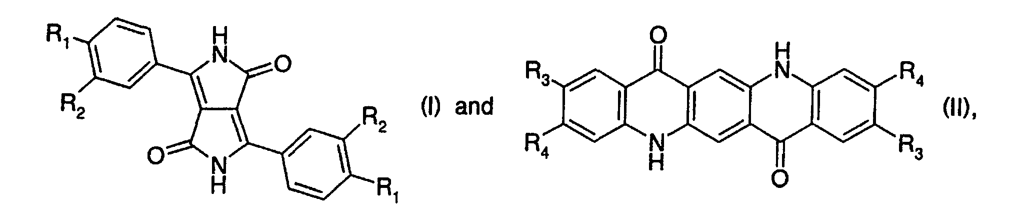 wherein R₁, R₂, R₃ and R₄ are each independently of the others hydrogen, chlorine, bromine, cyano, trifluoromethyl, C₁-C₈alkyl, C₁-C₈alkoxy or C₁-C₈alkylthio, wherein the pigments of formulae (I) and (II) have their own separate crystalline phases and at least one pigment of formula (I) or (II) is 1,4-diketo-2,5-dihydro-3,6-di(4'-chlorophenyl)pyrrolo-[3,4c]pyrrole or 2,9-dichloroquinacridone kneaded with a crystalline inorganic salt and a neutral organic liquid.

2. A process for the preparation of a pigment composition comprising pigments of formulae 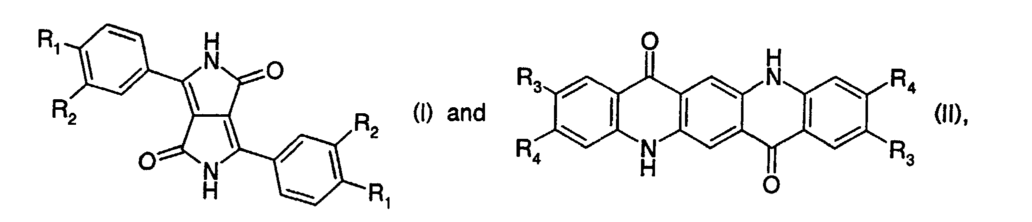 wherein R₁, R₂, R₃ and R₄ are each independently of the others hydrogen, chlorine, bromine, cyano, trifluoromethyl, C₁-C₈alkyl, C₁-C₈alkoxy or C₁-C₈alkylthio, wherein the pigments of formulae (I) and (II) have their own separate crystalline phases, by kneading 1,4-diketo-2,5-dihydro-3,6-di(4'-chlorophenyl)pyrrolo[3,4c]pyrrole as pigment of formula (I) or 2,9-dichloroquinacridone as pigment of formula (II) with a crystalline inorganic salt and a neutral organic liquid, washing out the crystalline inorganic salt and the neutral organic liquid, drying and mixing with the other component of formula (II) or (I) as the case may be.

3. A process for the preparation of a pigment composition comprising pigments of formulae 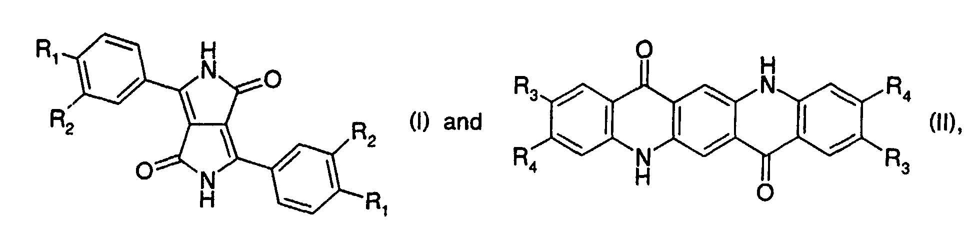 wherein R₁, R₂, R₃ and R₄ are each independently of the others hydrogen, chlorine, bromine, cyano, trifluoromethyl, C₁-C₈alkyl, C₁-C₈alkoxy or C₁-C₈alkylthio, the pigments of formulae (I) and (II) having their own separate crystalline phases, by
• combined kneading of 1,4-diketo-2,5-dihydro-3,6-di(4'-chlorophenyl)pyrrolo[3,4c]pyrrole and a pigment of formula (II) or combined kneading of 2,9-dichloroquinacridone and a pigment of formula (I), with a crystalline inorganic salt and a neutral organic liquid,
• washing out of the crystalline inorganic salt and the neutral organic liquid, and
• drying.

4. A process for the preparation of a pigment dispersion in a ball mill or bead mill wherein pigments of formulae 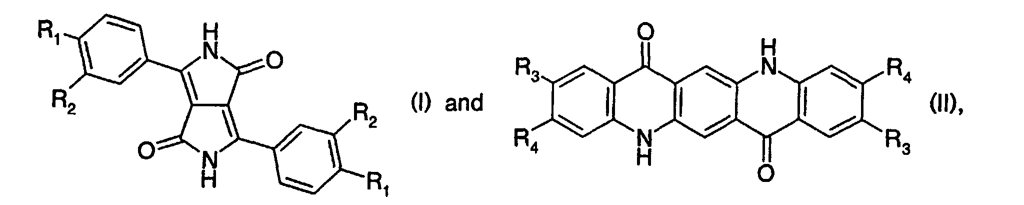 wherein R₁, R₂, R₃ and R₄ are each independently of the others hydrogen, chlorine, bromine, cyano, trifluoromethyl, C₁-C₈alkyl, C₁-C₈alkoxy or C₁-C₈alkylthio, are used, the pigments of formulae (I) and (II) having their own separate crystalline phases and at least one pigment of formula (I) or (II) being 1,4-diketo-2,5-dihydro-3,6-di(4'-chlorophenyl)pyrrolo-[3,4c]pyrrole or 2,9-dichloroquinacridone kneaded with a crystalline inorganic salt and a neutral organic liquid.

5. A printing ink or printing ink concentrate comprising a pigment composition according to claim 1.

6. A printing ink comprising pigments of formulae 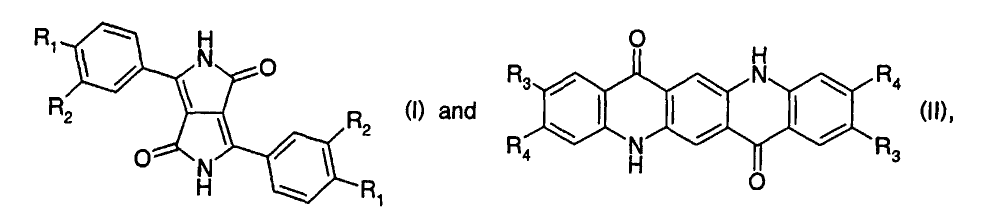 wherein R₁, R₂, R₃ and R₄ are each independently of the others hydrogen, chlorine, bromine, cyano, trifluoromethyl, C₁-C₈alkyl, C₁-C₈alkoxy or C₁-C₈alkylthio, wherein the pigments of formulae (I) and (II) have their own separate crystalline phases, the ratio by weight of pigment of formula (I) to pigment of formula (II) is from 1.5 : 1 to 1 : 1.2 and the printing ink, at a coloured pigment application rate of 0.06 g/m² on a white background yields, after drying, a hue angle h of from 350 to 360 or from 0 to 10 with a chroma value C* of at least 30.

7. A pigment composition according to claim 1, a process according to claim 2, 3 or 4, or a printing ink or printing ink concentrate according to claim 5, wherein both components of formulae (I) and (II) are kneaded.

8. A pigment composition according to claim 1, a process according to claim 2, 3 or 4, or a printing ink or printing ink concentrate according to claim 5 or 6, wherein the pigment of formula (I) is 1,4-diketo-2,5-dihydro-3,6-di(4'-chlorophenyl)pyrrolo[3,4c]pyrrole.

9. A pigment composition according to claim 1, a process according to claim 2, 3 or 4, or a printing ink or printing ink concentrate according to claim 5 or 6, wherein the pigment of formula (II) is quinacridone or 2,9-dichloroquinacridone, preferably 2,9-dichloroquinacridone.

10. A pigment composition, a process, a printing ink or printing ink concentrate according to claim 8, wherein the pigment of formula (II) is quinacridone or 2,9-dichloroquinacridone, preferably 2,9-dichloroquinacridone.

11. A pigment composition according to claim 1, a process according to claim 2, 3 or 4, or a printing ink or printing ink concentrate according to claim 5, wherein the specific surface area during kneading is increased from ≤ 40 m²/g to ≥ 40 m²/g.

12. A pigment composition according to claim 1, a process according to claim 2, 3 or 4, or a printing ink or printing ink concentrate according to claim 5, wherein as inorganic salt and as neutral organic liquid there are used a mono-, bis- or tris-hydroxy-C₂-C₁₂alkane compound or a polyethylene glycol or polypropylene glycol having from 1 to 120 ether groups, which may be unsubstituted or substituted by 1 or 2 oxo groups or at one or more hydroxy groups may be etherified by C₁-C₈alkyl or esterified by C₁-C₈alkylcarbonyl, or a mixture thereof.

13. A pigment composition according to claim 1, a process according to claim 2, 3 or 4, or a printing ink or printing ink concentrate according to claim 5, wherein the temperature during kneading is from -20 to 100°C.

14. A mass-coloured high molecular weight organic material containing
(a) from 0.05 to 70 % by weight, based on the sum of (a) and (b), of a pigment composition according to claim 1, and
(b) from 99.95 to 30 % by weight, based on the sum of (a) and (b), of a high molecular weight organic material.

15. A method of mass-colouring high molecular weight organic material wherein a pigment composition according to claim 1 is used.

## Revendications

1. Composition de pigments contenant des pigments ayant les formules 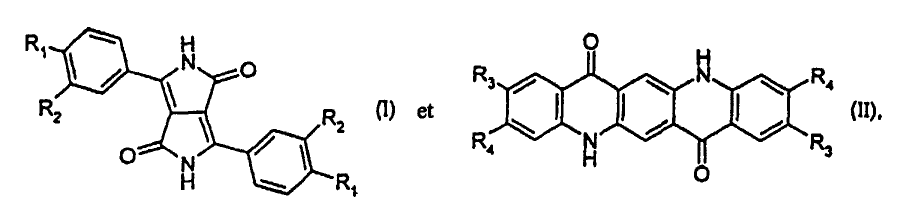 dans lesquelles R₁, R₂, R₃ et R₄ sont indépendamment les uns des autres de l'hydrogène, du chlore, du brome ou des groupes cyano, trifluorométhyle, alkyle en C₁-C₈, alcoxy en C₁-C₈ ou alkylthio en C₁-C₈, **caractérisée en ce que** les pigments de formule (I) et (II) ont des phases cristallines particulières propres et **en ce qu'**au moins l'un des pigments de formule (I) ou (II) est le 1,4-dicéto-2,5-dihydro-3,6-di(4'-chlorophényl)pyrrolo[3,4-c]pyrrole ou la 2,9-dichloroquinacridone malaxé(e) avec un sel inorganique cristallin et un liquide organique neutre.

2. Procédé de préparation d'une composition de pigments contenant des pigments ayant les formules 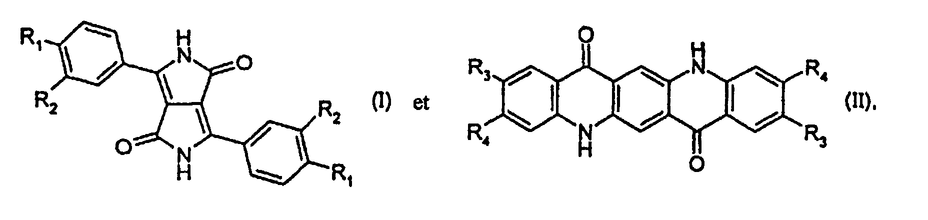 dans lesquelles R₁, R₂, R₃ et R₄ sont indépendamment les uns des autres de l'hydrogène, du chlore, du brome ou des groupes cyano, trifluorométhyle, alkyle en C₁-C₈, alcoxy en C₁-C₈ ou alkylthio en C₁-C₈, les pigments de formule (I) et (II) ayant des phases cristallines particulières propres, selon lequel on malaxe du 1,4-dicéto-2,5-dihydro-3,6-di(4'-chlorophényl)pyrrolo[3,4-c]pyrrole comme pigment de formule (I) ou de la 2,9-dichloroquinacridone comme pigment de formule (II) avec un sel inorganique cristallin et un liquide organique neutre, on élimine le sel inorganique cristallin et le liquide organique neutre par lavage, on sèche et on mélange avec l'autre constituant de formule (II) ou (I).

3. Procédé de préparation d'une composition de pigments contenant des pigments ayant les formules 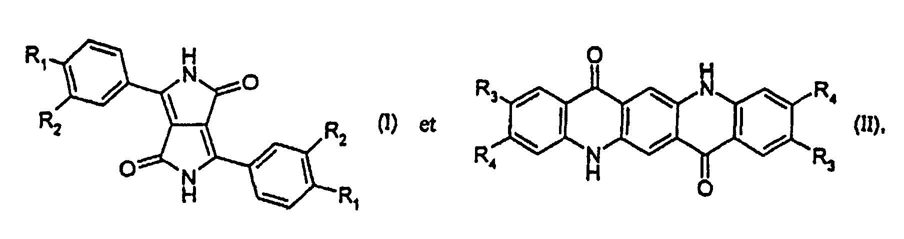 dans lesquelles R₁, R₂, R₃ et R₄ sont indépendamment les uns des autres de l'hydrogène, du chlore, du brome ou des groupes cyano, trifluorométhyle, alkyle en C₁-C₈, alcoxy en C₁-C₈ ou alkylthio en C₁-C₈, les pigments de formule (I) et (II) ayant des phases cristallines particulières propres, par
• malaxage simultané de 1,4-dicéto-2,5-dihydro-3,6-di(4'-chlorophényl)pyrrolo-[3,4-c]pyrrole et d'un pigment de formule (II) ou malaxage simultané de 2,9-dichloroquinacridone et d'un pigment de formule (I), avec un sel inorganique cristallin et un liquide organique neutre,
• séparation par lavage du sel inorganique cristallin et du liquide organique neutre, et
• séchage.

4. Procédé de préparation d'une dispersion de pigments dans un broyeur à boules ou à perles, **caractérisé en ce que** l'on utilise des pigments ayant les formules 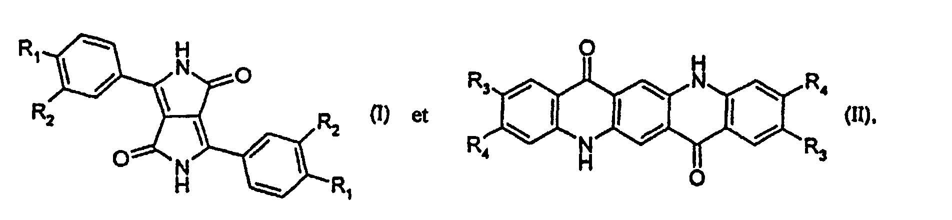 dans lesquelles R₁, R₂, R₃ et R₄ sont indépendamment les uns des autres de l'hydrogène, du chlore, du brome ou des groupes cyano, trifluorométhyle, alkyle en C₁-C₈, alcoxy en C₁-C₈ ou alkylthio en C₁-C₈, les pigments de formule (I) et (II) ayant des phases cristallines particulières propres, et au moins l'un des pigments de formule (I) ou (II) étant du 1,4-dicéto-2,5-dihydro-3,6-di(4'-chlorophényl)pyrrolo-[3,4-c]pyrrole ou de la 2,9-dichloroquinacridone malaxé(e) avec un sel inorganique cristallin et un liquide organique neutre.

5. Encre d'imprimerie ou concentré d'encre d'imprimerie contenant une composition de pigments selon la revendication 1.

6. Encre d'imprimerie contenant des pigments ayant les formules 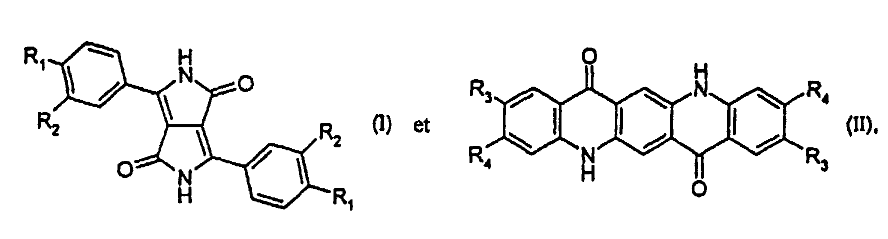 dans lesquelles R₁, R₂, R₃ et R₄ sont indépendamment les uns des autres de l'hydrogène, du chlore, du brome ou des groupes cyano, trifluorométhyle, alkyle en C₁-C₈, alcoxy en C₁-C₈ ou alkylthio en C₁-C₈, **caractérisée en ce que** les pigments de formule (I) et (II) ont des phases cristallines particulières propres, le rapport en masse du pigment de formule (I) au pigment de formule (II) est compris entre 1,5:1 et 1:1,2 et l'encre d'imprimerie atteint, dans le cas d'une quantité de pigment coloré appliquée de 0,06 g/m² sur un substrat blanc, après séchage, un angle de teinte h de 350 à 360 ou de 0 à 10 avec une saturation C* d'au moins 30.

7. Composition de pigments selon la revendication 1, procédé selon la revendication 2, 3 ou 4 ou encre d'imprimerie ou concentré d'encre d'imprimerie selon la revendication 5, dans lesquels les deux constituants de formule (I) et (II) sont malaxés.

8. Composition de pigments selon la revendication 1, procédé selon la. revendication 2, 3 ou 4 ou encre d'imprimerie ou concentré d'encre d'imprimerie selon la revendication 5 ou 6, dans lesquels le pigment de formule (I) est le 1,4-dicéto-2,5-dihydro-3,6-di(4'-chlorophényl)pyrrolo[3,4-c]pyrrole.

9. Composition de pigments selon la revendication 1, procédé selon la revendication 2, 3 ou 4 ou encre d'imprimerie ou concentré d'encre d'imprimerie selon la revendication 5 ou 6, dans lesquels le pigment de formule (II) est la quinacridone ou la 2,9-dichloroquinacridone, de préférence la 2,9-dichloroquinacridone.

10. Composition de pigments, procédé, encre d'imprimerie ou concentré d'encre d'imprimerie selon la revendication 8, dans lesquels le pigment de formule (II) est la quinacridone ou la 2,9-dichloroquinacridone, de préférence la 2,9-dichloroquinacridone.

11. Composition de pigments selon la revendication 1, procédé selon la revendication 2, 3 ou 4 ou encre d'imprimerie ou concentré d'encre d'imprimerie selon la revendication 5, dans lesquels la surface spécifique après le malaxage est augmentée de ≤ 40 m²/g à ≥ 40 m²/g.

12. Composition de pigments selon la revendication 1, procédé selon la revendication 2, 3 ou 4 ou encre d'imprimerie ou concentré d'encre d'imprimerie selon la revendication 5, dans lesquels on utilise comme sel inorganique et comme liquide organique neutre un mono-, di- ou trihydroxyalcane en C₂-C₁₂, ou un polyéthylèneglycol ou un polypropylèneglycol contenant 1 à 120 groupes éther, pouvant être non substitués ou substitués par 1 ou 2 groupes oxo ou éthérifiés par alkyle en C₁-C₈ ou estérifiés par (alkyl en C₁-C₈)carbonyle au niveau d'un ou plusieurs groupes hydroxy, ou un de leurs mélanges.

13. Composition de pigments selon la revendication 1, procédé selon la revendication 2, 3 ou 4 ou encre d'imprimerie ou concentré d'encre d'imprimerie selon la revendication 5, pour lesquels la température du malaxage est comprise entre -20 et 100°C.

14. Matériau organique de masse molaire élevée coloré dans la masse, contenant
(a) 0,05 à 70 % en masse, par rapport à la somme de (a) et (b), d'une composition de pigments selon la revendication 1 et
(b) 99,95 à 30 % en masse, par rapport à la somme de (a) et (b), d'un matériau organique de masse molaire élevée.

15. Procédé de coloration dans la masse d'un matériau organique de masse molaire élevée, **caractérisé en ce que** l'on utilise une composition de pigments selon la revendication 1.
